# EUROPEAN PATENT SPECIFICATION

(11) **EP 3 135 108 B1**
(45) Date of publication and mention of the grant of the patent: **28.02.2018**
(21) Application number: 15730522.8
(22) Date of filing: 24.04.2015
(51) Int. Cl.: A01M 29/06, A01M 29/00, B64C 39/00

(54) **BIOMIMETIC AND ZOOSEMIOTIC AERIAL VEHICLE GUIDED BY AN AUTOMATIC PILOT DEVICE**
BIOMIMETISCHER UND ZOOSEMIOTISCHER UNBEMANNTER FLUGKÖRPER
VÉHICULE AÉRIEN BIOMIMÉTIQUE ET ZOOSÉMIOTIQUE DIRIGÉ PAR UN PILOTE AUTOMATIQUE

(30) Priority: 25.04.2014 ES 201430615
(43) Date of publication of application: 01.03.2017
(73) Proprietor: Consejo Superior de Investigaciones Cientificas (CSIC), 28006 Madrid (ES); Morente Sánchez, Francisco Juan, 41100 Coria del Río (Sevilla) (ES); Morente Sánchez, Jesús David, 30820 Alcantarilla (Murcia) (ES)
(72) Inventor: MORENTE SÁNCHEZ, Francisco Juan, E-41100 Coria del Río (Sevilla) (ES); MORENTE SÁNCHEZ, Jesús David, E-30820 Alcantarilla (Murcia) (ES); FIGUEROLA BORRAS, Jordi, E-41092 Sevilla (ES); SOJO BALLESTEROS, Raúl, E-41092 Sevilla (ES); GANGOSO DE LA COLINA, Laura, E-41092 Sevilla (ES); MARTÍNEZ DE LA PUENTE, Josue, E-41092 Sevilla (ES)
(74) Representative: Carvajal y Urquijo, Isabel
(86) International application number: PCT/ES2015/070346
(87) International publication number: WO 2015/162330

(56) References cited:
- CN-A- 101 627 752
- DE-U1- 20 010 995
- DE-U1- 20 211 129
- US-A- 4 964 331
- US-A1- 2011 301 784
- US-B1- 7 543 780
- US-B1- 8 511 606

## Description

### FIELD AND OBJECT OF THE INVENTION

The present invention lies within the sector of flying devices for applications such as frightening off animals.

Specifically, the object of the present invention is a biomimetic and zoosemiotic aerial vehicle incorporating sensors and means to detect and frighten off animals, its main characteristic being that it is equipped with a programmable automatic pilot.

An object of the present invention is also the use of this vehicle in applications such as the control of certain plagues, in addition to the inspection of environmentally protected areas.

### STATE OF THE ART

Concentrations of wild animals may represent a risk for crops, farms and for the health of humans and other animals of financial interest or for their conservation. Animals flee from situations they perceive as a risk for their life and to be able to reproduce the stimuli that they perceive as threatening is an effective method to frighten them off. The invention attempts to stage the same acts as arise in nature to achieve predictable reactions in animals with biomimetic aerial vehicles which imitate their pure and descriptive zoosemiotics: visual, acoustic, tactile and chemical, through the study of zoology, robotics, biomechanics, mechatronics and aeronautics to blend into the environment, attract or frighten off animals. This mimicking achieves that the natural habits are not invaded and real studies can be performed on animal behaviour and discrete persecutions with important investigation and police applications. Attracting and/or calming animals is of interest in zoological studies, e.g. in the capture and taking of biological samples of individuals of species under threat and other applications such as farming, a vehicle with biomimetic appearance and zoosemiotic behaviour is capable of attracting individuals of the same or other species to the areas of capture or observation. Each species, at any time, may require different unmanned biomimetic aerial vehicles. To frighten off, models are used of the Falconidae, Accipitriformes or Strigiformes order and the family, genus and species that the animals most fear. It may also be effective in some cases for the aerial vehicle to mimic any animal, even though not flying.

Available commercial automatic pilots do not have the capacity to make zoosemiotic movements since they are designed to perform a simple navigation towards a series of points which have previously been programmed from a control station by a system operator and it is not anticipated that from a computer, governed by the vehicle's own sensors, it is possible to perform an autonomous control of the vehicle or imitate biomechanical movements typical of flying animals and collaborate with other uses which simplify, cheapen related jobs and products costs in the following processes: study, control, research, security, environment, zoology, architecture, beekeeping, farming and fishing. The FAO considers that the integrated control of plagues may involve a saving of 30% water and 60% energy. It is even possible to increase yields up to six fold, as shown by the tests with corn recently performed in southern Africa, with average yields of the farms which apply this type of techniques in 57 countries of low income increased by almost 80 per cent.

As background of the invention, the following should be highlighted:
1) patent document CN 101627752, published on 20 January 2010, which shows an unmanned flying device which simulates an eagle to protect farmland grains. It uses a controller to actuate a motor of a small turbofan which drives the device which, once in the air, is controlled by a remote control.
2) Patent document JP 2003304795, published on 28 October 2003, which shows a device which simulates an eagle or falcon to repel plagues of birds using their visual and auditory sharpness with flashing eyes, moving tail and loudspeakers which emit sounds of birds of prey.
3) Utility model CN 201563537, published on 1 September 2010, which discloses a type of eagle which floats in the sky with speaker means.
4) Patent document US 2005224636, published on 13 October 2005, which shows a kite with the form of bird of prey which, on reaching a certain height, flies around an area.
5) Utility model document CN 2626860, published on 21 July 2004, which shows the use of aeromodelling by remote control to disperse birds in airports, reproducing sounds, ultrasound and lights.
6) Patent document US 4964331, published on 23 October 1990, which discloses a birdstrike prevention device which is mounted on a radio-controlled airplane provided with a remote control cannon mounted on a radio-controlled airplane for launching of incendiary devices in order to limit the presence of birds in airports.
7) Patent document US 2011301784, published on 8 December 2011, which discloses a reduced scale form helicopter, for industrial use such as in surveillance operations, border control, crime prevention, military reconnaissance, disaster reconnaissance, etc.
8) Patent document US 7543780, published on 9 June 2009, which discloses a small unmanned air vehicle guidance arrangement usable for docking the vehicle on an electrical transmission line conductor.
9) Patent document US 2009194634, which discloses an aerial vehicle able to reproduce the call of a swan or of geese.
10) Patent document DE 20010995-U1 discloses a device using a siren to achieve an additional shock effect on animals.

These documents imitate the external form of birds of prey to cause thanatophobia. Some try to imitate the sound and the flight of the birds of prey by manually actuating a device with remote control techniques. But none speaks of simulating their zoosemiotics to attract other animals, blend into their habitat or increase fear, since the simple presence of the bird of prey passing through satellite coordinates is not sufficient. A falconiform, more specialized in open field, develops a circular flight at a certain height with extended wings. If it imitates an accipitriforme, more opportunistic and specialized in woody areas, their attack is situated behind or slightly behind the prey. The movements help the animals clearly and accurately identify the threat that represents the species reproduced by the aerial vehicle or another member of its species.

The aerial vehicle object of the present invention has advantages with respect to commercial vehicles incapable of carrying out flight functions, displacement and simulation of real attacks typical of each species, combining the reading of satellite signals with that of the microprocessor and sensors. It is a very useful tool for collaborating in agriculture compatible with the conservation of the environment since its use not only avoids animal predation but the contamination of other areas, when they transport insects, parasites, fungi and pathogens in their feet, beaks, hair and feathers.

### EXPLANATION OF THE INVENTION

In a first aspect, an object of the present invention is a biomimetic and zoosemiotic aerial vehicle comprising a fuselage (1), which incorporates:
- at least one electric motor fed by rechargeable batteries (10) and feedback systems (9)
- blade and a rotor coupled to the output shaft of the electric motor
- servomotors for the actuation mechanisms of the moving parts of the aerial vehicle, including elevators (3) and rudder (13).
- trigger systems actuated by a servomotor
- microphones and speaker means
- photographic camera of vision and recording, thermal and/or thermographic and infrared (7)
and it further comprises an automatic pilot (2) configurable in open source code with control cards and relays (6) connected to a ground control base (8), as well as inertial modules incorporating:
- digital compass
- gyroscopes
- magnetometers
- inertial measurement units
- barometer
- telemetry
- digital compass
in addition to sonar and pressure measurement means, as well as a stroboscopic lighting system and wherein the vehicle is able to reproduce sounds simulating the sounds of agony, help and/or pain of a species. The vehicle preferentially mimics falconidae, accipitriformes or strigiformes.

In successive preferred embodiments of the invention, the servomotors actuate the wing and tail mechanisms if the vehicle is of fixed wing or the swashplate and ailerons for the cyclic rotation if the vehicle is a helicopter of single rotor, dual rotor, intermeshing or coaxial, in tandem, multirotor, aerostat or ornithopter type.

In a preferred embodiment of the vehicle object of the invention, the configurable automatic pilot is based on a plate, which incorporates a 32-bit microcontroller and communication cards.

A Global Satellite Navigation System satellite model allows the vehicle to navigate through predefined points of passage.

The pressure measurement means included in the aerial vehicle are selected from pressure anemometers or Pitot tubes.

Optionally, the aerial vehicle includes at least one of the following devices:
- solar panels (11)
- radio beacon (12)
- stabilized control camera
- radiofrequency communication system
- shutter control
- joystick control
- video link programmable live on screen
- motor cone with mirrors when used for frightening
- ultrasound wave and/or laser device (7)
- volumetric and heat sensors (4),
in addition to means for the lighting (5) of the contours, forms and tinting which favour mimicking, repulsion or attraction.

Another object of the present invention is the use of the aerial vehicle for the following applications:
- frighten off, attract or mimic animal species, especially in fields of crops.
- inspection of protected areas, especially power cables and substations.

### BRIEF DESCRIPTION OF THE FIGURES

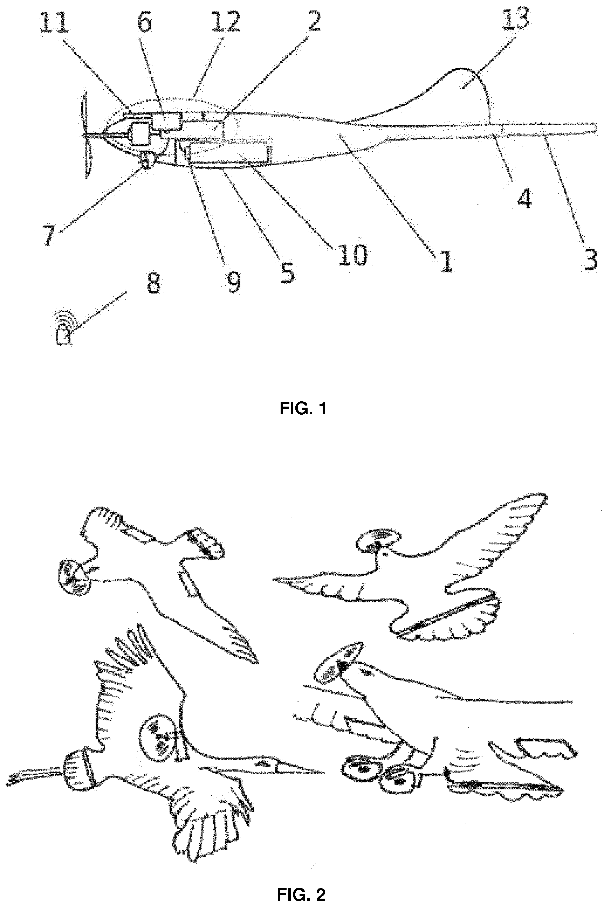

**Figure 1****:** Diagrammatic representation of a form of embodiment of the biomimetic and zoosemiotic aerial vehicle in which:
   1.-Fuselage
   2.- Automatic pilot
   3.- Elevators
   4.- Volumetric and heat sensors
   5.- External lighting system
   6.- Control cards and relays
   7.- Laser, sensors, photographic camera, of video, infrared and/or thermal
   8.- Ground control base
   9.- Feedback systems
   10.- Battery
   11.- Solar panels
   12.- Radio-beacon
   13.- Rudder
**Figure 2****:** Some biomimetic representations that the aerial vehicle can adopt.

### DETAILED DESCRIPTION OF THE INVENTION

The invention represents the figure and zoosemiotics typical of any flying animal by means of a biomimetic aerial vehicle with the intention of: blending into the environment, attracting animals, frightening them away and with agricultural applications that are precise and safe.

When the aircraft has the form of bird of prey, its presence is sufficient to frighten off other vertebrates, but its efficacy increases on reproducing the typical attack movements of the birds of prey. The fear increases, with a device which reproduces the sounds of agony, help and/or pain of the species to combat. The microprocessor accepts various digitalized representation packages to simulate these scenes. The invention takes into consideration the spectral sensitivity of each species to different wavelengths. This quality is used by the device to attract, annoy, damage and/or attack with stroboscopic lights, light reflections and/or laser. Chemistry plays a vital role in animals such as mammals and invertebrates and this causes them repulsion or attraction which calms, confuses or combats them. The trigger of any device avoids the visual accommodation and the risk of habituation with the continued presence of the threat. The fuselage incorporates, at least, an electric motor fed by rechargeable batteries in the output shaft whereof is coupled a rotor, servomotors for the actuation mechanisms of wings and tail if is it is fixed wing and and/or aerostat, servomotors for the swashplate if is a helicopter in any of its varieties: single rotor, dual rotor, intermeshing or coaxial, in tandem and multirotor or a combination of ornithopter and fixed wing or rotating wing to improve the visual perception and aerostat where the pressure of the gas itself maintains the biomimetic structure. Trigger system actuated by a servomotor. The microphones and loudspeakers allow direct communication from the aircraft, recording and/or emitting sounds.

It is possible to incorporate a photographic camera, of vision and recording, chromatographic, thermal and infrared to inspect areas of difficult access, detect animal instructions in total darkness and under any meteorological conditions. Multispectral vision involves extending the response of cameras to the ultraviolet and infrared spectrums, detecting forms and problems which may go unnoticed, especially when the luminosity is reduced.
The operation of the aerial vehicle object of the present invention to frighten off seed predator birds from a sunflower field, would be as follows:
1.- When a mission is manually activated or a threat is detected by means such as radar or other sensors, the vehicle takes off and goes to the first configured point of passage.
2.- The navigation software is introduced to activate accelerometers, magnetometers, compass and other digital and mechanical actuators such as servomotors and propulsion.
3.- On reaching the satellite point, the pilot may start (or not start) the attack activating an algorithmic package of specific zoosemiotic stabilization during the programmed time. Then, it heads towards the following point of passage and so on and so forth. Its zoosemiotics can also be programmed throughout the route between the two satellite points. These movements require a greater energy consumption.
4.- It allows data from other sensors placed on earth and it may activate any device or physical actuator to increase the fear.
5.- Once the mission has finalized, it lands and waits for the following trigger, whilst it charges the batteries. In an optional configuration, the vehicle may take off again or cause the departure of another vehicle.

### EMBODIMENT OF THE INVENTION

In a particular embodiment, the aerial vehicle object of the invention incorporates a programmable automatic pilot based on an Arduino plate with an ARM (*Advanced Risk Machines*) CortexM3 microcontroller, the inertial models of which may integrate different types of sensors, such as the LV MaxSonar EZ-1 sonar from MaxBotics with serial and analogue outputs which are those used for reasons of latency with one inch resolution and a scope of 6 metres.

Its trigger may activate any device. Digital compass, gyroscopes to perform rotations and pirouettes which are defined and credible, magnetometers, Inertial measurement units (IMU), barometer, telemetry in general and digital compass, orientation sensors (which combine the accelerometer and magnetometer with the terrestrial gravitational and magnetic fields) and pressure anemometer or Pitot tube. The accelerometers together with the ultrasound and/or laser sensors measure altitude until around 9 metros, after which the silicon pressure sensors come into action, which give a centrimetric precision and help stabilize the aircraft.

The communication cards of the automatic pilot are based on the FT232R transceptor with ATmega8U2 microcontroller. The vehicle includes a Global Satellite Navigation System satellite model (*GNSS*), which makes it possible to navigate through the points of passage. It incorporates a radio beacon, return home due to vital failure of the system (*FailSafe*)*,* autonomous take-off and landing, control camera and triple -shaft stabilization, shutter control, radiofrequency communication system, joystick control, video link programmable live on screen, visibility by graphics in application programmes of the geographic information systems designed to show and edit cartography in *web mapping* environments such as Google Earth from which it is possible to design the points of passage and the flights.

The code of the control base and the files such as the *ACME* of the accelerometer have been modified for the points of passage, adding functions and behaviours with a control software in eclipse which controls sensors, motors and accelerations and digitalized and configured packages of each species have been introduced.

The microprocessor regulates the compliance at each point of satellite passage of the pre-established mission in the development platform with an open source software, where the programmes are created for the devices which allow the reading and control of any sensor or physical actuator with a robust architecture and a sensor control with superimposed loops for their feedback. Their programming in Arduino and Wiring-based language allows their expansion through C++ libraries in a programming environment based on Processing. The I2C input port (*Inter-Integrated Circuit*), characterized in that it has two information lines: one for data transmission and another for the clock, allows constructing sensor matrices, programming routes in 3D and mission commands.

The control of the servomotors is performed by hardware, algorithms and advanced filters based on direction cosine matrices which improve the data fusion sensor such as *Premerlani-Bizard robust direction cosine matrix estimator* which, to transform it into a heavier Kalman filter, uses a rotation matrix or direction cosine matrix which describes the orientation of a system of coordinates with respect to the other. The opposite transformation is performed with the inverse of the rotation matrix, which is identical to the transposed matrix, so that as it is an orthogonal matrix and related with the Euler angles, it changes in accordance with the orientation of the aerial vehicle. The numerical integration is achieved by making successive multiplications with the measurements provided by the gyroscope in milliseconds. As the numerical errors of the vector product of the reference vector with that of the director cosine matrix are accumulative in time, the matrix loses an orthogonality which must be corrected again scaling its rows so that they are vectors of magnitude 1 and retaking the measurement of the gyroscope to cancel out the errors added to the offset, which disappear with the integral, with the taking of another orientation measurement without offset such as that of the GPS (when it is a fixed wing vehicle to obtain the yaw) and triple-shaft magnetometers (for vertical take-off vehicles).

The control of the yaw, rolling and pitching angles, orders the stabilization and navigation. The last two are supervised by the components with proportional and derivative components, and independent of the yaw which is controlled in addition to the integral action of the calculation algorithm of the feedback control. Their analyses determine the independent gains of each controller to establish speeds and/or position of the servomotors in each satellite point, according to its zoosemiotic algorithms. There are as many programming alternatives as biomimetic vehicles, sensors and missions. So that the aerial vehicle moves with a certain lightness and awakens fear when it is used to frighten off, it requires that the processor works at the maximum frequency to obtain an acceleration which improves its zoosemiotics. As the sketch is introduced by means of the communication card to control the vehicle, the chains are received with the programme format. This operation can also be performed in flight although it is subject to the scope of the WiFi which also demands a large energy consumption. After the setup function, a sketch programme is initiated which is used to initiate variables, establish the status of the pins and initiate libraries. This function is executed a single time after connecting the plate to the power source. Then, the *loop* algorithm is executed consecutively once per cycle, being able to use the control structures to define the desired execution periods, implementing a complete planner which selects the code to be executed in each cycle, allowing a programme to vary and respond. The algorithm is located in the interior of this function, to actively control the Arduino plate. The *loop* method structures the execution of the entry in different methods and functions which, limited by the memory, has sometimes required an optimized and demanding coding against a legible code. Using the Libcompass library and after opening the *IDE (Integrated Development Environment*) the *GetHeadingSerial* returns, through the serial port, the sensor angle with respect to the north and *CalibrateCompass* makes it possible to calibrate the sensor. After uploading this sketch, it measures the surrounding magnetic fields and it is calibrated to ignore them with respect to the terrestrial. This calibration must be performed when all the components are located in their definitive place so as not to create magnetic disturbances or incorrect measurements from, for example, the motors. Once the library has been installed and the connections have been performed, the information of the sensor which will be used to serially receive the angle and request a *compass.GetHeading* appears on the graphic screen.

Once calibrated, the firmware is established, the values are verified and the emission system, the flight modes, the PID (*proportional, integral and derivative*) calculation algorithms and the missions with their points of passage are configured. The variables, which are sent every few milliseconds, in each package requested by the earth station to update the screen labels are: current latitude, longitude and altitude of the vehicle, number of satellites which observe the GPS, 3 angles of orientation of the IMU and distance to the point of destination. The vehicle heads towards that point defined by the latitude, longitude and altitude using the information provided by the GPS and maintaining a straight line trajectory. There exists a configurable margin around the point of passage where it is considered that the aircraft is found and which can also be used to introduce executable zoosemiotic algorithms without this supposing an advance towards the next point of passage. As in any other case, this modifiable radius of action makes it possible to activate a simple relay card in the circular flights which cuts out a servomotor during a few seconds, to cause momentary falls and losses of control, emitting sounds which will mean for some animals the start and the success of attacks.

This configuration is programmed with a sufficient height so as not to place the aerial vehicle at risk. Establishing zoosemiotic trajectories between the points of passage requires a greater energy and computational cost than a normalized flight. The IMU provides the latitude, longitude and yaw angle, which corresponds with the direction of the vehicle, measured as the angle formed with respect to the north direction between 0° and 360°, where 90° corresponds to the east direction and 270° the west direction. So that, for the arccotangent equation to return an angle which includes the entire circumference, it will be necessary to take into consideration the signs of the numerator and denominator. This function of the *atan2* compiler is used for the zoosemiotic design.

To start the code, the drivers of the propulsion motors and servomotors are implemented, installing a position, speed and acceleration control, which uses an acceleration ramp with an *S-profile* profile in the start-up so that some movements are softer, natural and avoid material fatigue. The speed control may come to generate maximum pulses of 25 khz and the position control operates at 1 khz. The modifications made in the test application are transferred to the final code which is uploaded, such as when a motor does not rotate in the correct direction and the *delfine INVERT_X_ASIS* code is modified. Another form of programming consists of using the video switch on/off trigger device for the simulation of deficient movements for a certain time to activate the packages of zoosemiotic algorithms at the points of passage established until the pertinent code line, even recording an event in the *LOG* which shows the coordinates that were performed.

To achieve that the code is more asynchronous, it avoids using the *delay* function which stops the execution of the code making a synchronous stop. The automatic pilot executes with a certain frequency, depending on the case, a call to various subfunctions so that it must not stop unless, in each execution of APM *(Advanced Power Management)* it requests the status the camera is in and, in accordance with this, acts on the delay. In other words, to not make stops, it defines the status which it is in during a certain time, after which it passes to another status. A class is created called *APM_ataque,* which represents the device. This class does everything to do with the attack simulation. This isolates to a maximum its operation of the original APM code. When it uses the trigger system of the photographic camera which now incorporates the pilot to start the stagings, an attribute of the class represents the status of the camera: *switched on, switching on, switching off, switched off.* Within the class, the times are defined as constants. If it uses another version of the other pilot in which the times are different, it is only necessary to retouch this attribute.

In the main Ardupilot program, when one wants to switch on the device, it makes a call to one function of the class which verifies that the status variable takes the value "*switched off*", otherwise it will exit the point of passage. If the value of the variable is *"switched off",* it changes the value of the variable to *"switching on",* and continues the execution. The function is always executed in the main programme verifying if the status of the camera is other than *"switched off".* If this is the case, it is necessary to check if the necessary time has elapsed to pass to the next stage and, if so, act on the relay, change the value of the status variable and continue the execution. In this case, the time between photo and photo, in other words, between one zoosemiotic package and the other, is approximately 8 seconds.

This programming does not accurately control when the photo has finished being taken and, therefore, the end of the mission, since it does not define when it is *switching on* which is just when the 2 seconds necessary to press the switch-on button have passed or, *switching off (static void take_picture and one button mode),* when the 2.5 seconds necessary for the switching off elapse. Therefore, if one wants to show any zoosemiotics at that point of passage, it is necessary to begin the process before and calculate when it must switch on so that, after 4.5 seconds, the vehicle is within the point of passage. When it executes this sketch the pilot remains several seconds waiting whilst the relay in question continues activated. In short, to avoid the relay function, a subroutine is created within the *void_loop* function and its respective functions and sentences or it works with the PORTL|=B00000100 and PORTL^=B00000100 function. To prioritize the number of steps of the motors over their duration without the system blocking and to be able to work with other functions, it avoids the instruction *delay (1000)* using the *loop* function and from here, control the value of an established variable so that when it orders the activation the milliseconds are required with *millis* and they are stored in a variable previously established in the setup. From *loop* it is observed how it works with the rest of the code, but the difference between the current time and those stored at the start (which will be greater than 1000) makes it possible to change the status of that function. Another more practical form of programming consists of continuously taking photos, i.e. the device maintains the zoosemiotic devices constantly activated, whilst it can send the incrusted georeferenced information to the output live by wireless video through *the On Screen Display* and observe in real time in what place the plague is greater for the taking of later decisions. This design makes it necessary to take continuous navigation data. In order to not touch the programming in the pilot, the Texas Instruments MSP430 controller is installed which allows an infinity of combinations, an almost zero consumption and expansions through its inputs. Its programmings have activations with time lapses which range from 1, 2, 5, 10, 30 or 60 seconds. This design may be conditional upon the activation of other sensors such as that of presence. Finally, the versatility of the platform allows adding an Arduino Pro Mini control plate with the 328 chip with 16 digital ports of which 6 can be used as PWM (*pulse-width modulation*) which, to avoid the radiofrequency interferences typical of these circuits, it is installed close to the charge and it filters the power source. The others can also be configured as PWM outputs by hardware incorporated in the microcontroller and perform the conversion to PWM pulses in the other pins.

For the correct design of a navigation algorithm it is necessary to know the orientation provided by the triple-shaft digital compass, HMC5843, which is communicated through the two I2C lines of the plate and its two analogue inputs. The infrared and/or ultrasound sensors are connected. If more inputs are necessary, an analogue multiplexer is used (such as the MC14051) which expands it with a further eight lines. As the platform has difficulties for the debugging of codes, a complementary message debugging system is implemented, both to be able to perform unit tests, and to debug codes in the case of anomalous behaviour. Codes have been optimized to improve the timers and other specific mechanisms of the hardware, planners have been installed to control and limit the execution time of each routine and the form of modularizing and structuring the code to optimize both the performance and memory use have been modified.

For the filing of the GPS, algorithms are created based on obtaining the current position and the calculation of the distance which, instead of using trigonometry, uses a method which relates the coordinates of latitude and longitude of both points with the earth's radius based on the Haversine formula. The software architecture is subject to the general structure of a program which can be downloaded in the Arduino platform which must have two procedures by way of entry point which are automatically claimed by the framework planner. From *loop* the rest of the code can be modularized and structured as desired. After the setup, the logs and variables of each driver initiate and the possible calibration procedures of the analogue sensors and necessary initialization procedures are executed. To manage the resources and control the execution of each software module, a planner was implemented in the *loop* procedure which makes the calls to the other modules, such as the input/output drivers responsible for communicating with the sensors in different ways, in addition to providing an access interface to the values received from the sensors and/or writing (of *get*/*set type*) of the output values towards the motors, so that the other modules can communicate with all the input/output devices without worrying about the protocol of technology used by the driver.

It incorporates Tesla coils with magnetic field, radio interference and electromagnetic noise (*energy-harvesting*) capture antennas which act as a transformer. This sinusoidal signal, of the same frequency as that generated, is rectified to achieve a continuous signal using germanium diodes. Connecting another receiver with the loops of the wound coil in a direction contrary to the first, imitates a complete wave rectifier which, together with a resistance and a condenser makes an effective filter with minimum losses. This amplification is effective at connecting in series up to five voltage duplicators, which receive the alternate signal of the condenser, amplified in each status so that at the fifth it no longer generates voltage and even loses voltage through the diodes. The superimposed undulations finally generate a continuous signal. This energy, together with that of the solar cells, the Bedini motor and/or Stirling engine, are amplified by the Joule thief to increase the autonomy of the batteries.

The configuration of the automatic pilot admits the data from other vision or attention sensors placed on the ground or the voice recognition which makes it possible to intervene in the flight by verbal orders which may be encrypted so that it cannot be piloted by unauthorized personnel.

In power line inspection applications, the vehicle includes a corona-effect ultraviolet camera which seeks the presence of contaminants in the isolation chains of the lines and of an ineffective washing thereof, hoods of the chains in short-circuits, damages to conductors, nuts and bolts, tools, weak connections of the components and verification of repairs made. With the thermographic and hyperspectral camera, photons are detected emitted by heat to prevent electrical failures, optimizing the maintenance and unscheduled stops.

For video transmission, the vehicle incorporates a camera which works at frequencies of 5.8 GHz, eliminating the interferences on the control link and a wireless fidelity amplifier (*WiFi*)*,* IEEE 802.11b of 1000 mW with an output power which makes it possible to extend applications during several kilometres such as FPV (*First-person view*).

## Claims

1. Biomimetic and zoosemiotic aerial vehicle to frighten off, attract or mimic animal species, wherein the vehicle comprises a fuselage (1), incorporating:
- at least one electric motor fed by rechargeable batteries (10) and feedback systems (9),
- blade and a rotor coupled to the output shaft of the electric motor,
- servomotors for the actuation mechanisms of the moving parts of the aerial vehicle, including elevators (3) and rudder (13),
- trigger systems actuated by the servomotors,
**characterized in that** it comprises:
- microphones and speaker means to allow direct communication, recording and/or emitting sounds,
- photographic camera, of vision and recording, thermal and/or thermographic and infrared (7),
- an automatic pilot (2) configurable in open source code with control cards and relays (6) connected to a ground control base (8), as well as inertial modules, wherein the inertial modules incorporate:
- digital compass,
- gyroscopes,
- magnetometers,
- inertial measurement units,
- barometer,
- telemetry,
- sonar,
- pressure measurement means,
- a stroboscopic lighting system (5) to attract, annoy, damage and/or attack a species considering the spectral sensitivity of each species to different wavelengths, and
wherein the vehicle is able to reproduce, by the speaker means, the sounds stored in digitalized representation packages to simulate the sounds of agony, help, and/or pain of a species.

2. Vehicle according to claim 1, wherein it mimics falconidae, accipitriformes or strigiformes.

3. Vehicle according to any of claims 1 or 2, wherein the servomotors actuate the wing and tail mechanisms if the vehicle is of fixed wing.

4. Vehicle according to any of claims 1 or 2, wherein the servomotors actuate the swashplate and ailerons for the cyclic rotation if the vehicle is a helicopter of single rotor, dual rotor, intermeshing or coaxial, in tandem, multirotor, aerostat or ornithopter type.

5. Vehicle according to any of claims 1 to 5, wherein the configurable automatic pilot is based on a plate, which incorporates a 32-bit microcontroller and communication cards.

6. Vehicle according to claim 5, wherein it includes a Global Satellite Navigation System satellite model which makes it possible to navigate through predefined points of passage.

7. Vehicle according to any of claims 1 to 6, wherein the pressure measurement means are selected from pressure anemometers or Pitot tube.

8. Vehicle according to any of claims 1 to 7, wherein it additionally includes at least one of the following devices:
- solar panels (11)
- radio beacon (12)
- stabilized control camera
- radiofrequency communication system
- shutter control
- joystick control
- video link programmable live on screen
- motor cone with mirrors when used for frightening off
- ultrasound wave and/or laser devices (7)
- volumetric and heat sensors (4)

## Patentansprüche

1. Biomimetisches und zoosemiotisches Luftfahrzeug zum Abschrecken, Anziehen oder Nachahmen von Tierarten, wobei das Fahrzeug einen Rumpf (1) umfasst, welcher Folgendes enthält:
- mindestens einen Elektromotor, der von wiederaufladbaren Batterien (10) gespeist wird, und Feedback-Systeme (9),
- ein Blatt und einen Rotor, der an der Abtriebswelle des Elektromotors gekoppelt ist,
- Servomotoren für die Antriebsmechanismen der beweglichen Teile des Luftfahrzeugs, einschließlich Höhenruder (3) und Seitenruder (13),
- Auslösesysteme, die von den Servomotoren angetrieben werden, **dadurch gekennzeichnet, dass** es Folgendes umfasst:
- Mikrofone und Lautsprecher, um die direkte Kommunikation, das Aufnehmen und/oder das Aussenden von Lauten zu ermöglichen,
- eine Fotokamera, der Art einer Bild- oder Videokamera, Wärmebild- und/oder Thermografie- sowie Infrarotkamera (7),
- einen in Open Source konfigurierbaren Autopiloten (2) mit Kontrollkarten und Relais (6), welcher mit einer Bodenkontrolle (8) verbunden ist, sowie Trägheitsmodule, wobei die Trägheitsmodule Folgendes enthalten:
- einen digitalen Kompass,
- Gyroskope,
- Magnetometer,
- Trägheitsmesseinheiten,
- Barometer,
- Telemetrie,
- Sonar,
- Druckmessmittel,
- ein stroboskopisches Beleuchtungssystem (5) zum Anziehen, Stören, Schädigen und/oder Angreifen von Tierarten unter Berücksichtigung der spektralen Empfindlichkeit jeder Tierart gegenüber verschiedenen Wellenlängen und
wobei das Fahrzeug durch die Lautsprecher die in digitalisierten Darstellungspaketen gespeicherten Laute wiedergeben kann, um die Agonie-, Hilfe- und/oder Schmerzlaute einer Tierart zu simulieren.

2. Fahrzeug nach Anspruch 1, wobei es Falconidae, Accipitriformes oder Strigiformes nachahmt.

3. Fahrzeug nach einem der Ansprüche 1 oder 2, wobei die Servomotoren den Flügel- bzw. Schwanzmechanismus antreiben, wenn das Fahrzeug der Art mit festen Flügeln ist.

4. Fahrzeug nach einem der Ansprüche 1 oder 2, wobei die Servomotoren die Taumelscheibe und die Querruder für die zyklische Drehung antreiben, wenn das Fahrzeug ein Hubschrauber eines einzigen Rotors, eines dualen Rotors, der Art eines Flettner-Rotors oder eines Koaxialrotors, in einer Tandem-Konfiguration, eines mehrfachen Rotors, ein Aerostat oder ein Ornithopter ist.

5. Fahrzeug nach einem der Ansprüche 1 bis 5, wobei der konfigurierbare Autopilot auf einer Platte basiert, welche einen 32-Bit-Mikrocontroller und Kommunikationskarten enthält.

6. Fahrzeug nach Anspruch 5, wobei es ein Satellitenmodell der Art eines globalen Satellitennavigationssystems einschließt, welches ermöglicht, durch vorbestimmte Durchfahrtstellen zu navigieren.

7. Fahrzeug nach einem der Ansprüche 1 bis 6, wobei die Druckmessmittel aus Druckanemometern oder einem Pitot-Rohr ausgewählt sind.

8. Fahrzeug nach einem der Ansprüche 1 bis 7, wobei es ferner mindestens eine der folgenden Vorrichtungen einschließt:
- Solarpaneele (11)
- Funkbake (12)
- stabilisierte Kontrollkamera
- Hochfrequenzkommunikationssystem
- Verschlusskontrolle
- Joystick-Kontrolle
- live am Bildschirm programmierbare Videoverbindung
- Motorkegel mit Spiegeln bei Benutzung zum Abschrecken
- Ultraschallwellen- und/oder Laservorrichtungen (7)
- Volumen und Wärmesensoren (4)

## Revendications

1. Véhicule aérien biomimétique et zoosémiotique pour chasser, attirer ou mimer les espèces animales, dans lequel le véhicule comprend un fuselage (1), incorporant :
- au moins un moteur électrique alimenté par des batteries rechargeables (10) et des systèmes de rétroalimentation (9),
- une hélice et un rotor couplés à l'arbre de sortie du moteur électrique,
- des servomoteurs pour les mécanismes d'actionnement des parties mobiles du véhicule aérien, comportant des gouvernes de profondeur (3) et gouvernes de direction (13),
- des systèmes de déclenchement actionnés par les servomoteurs, **caractérisé en ce qu'**il comprend :
- des microphones et des moyens de haut-parleur pour permettre une communication directe, des sons enregistrés et/ou émis,
- un appareil photo, de vision et d'enregistrement, thermique et/ou thermographique et infrarouge (7),
- un pilote automatique (2) configurable en code source ouvert avec des cartes et relais de commande (6) reliés à une base de commande au sol (8), ainsi que des modules inertiels, dans lequel les modules inertiels incorporent :
- une boussole numérique,
- des gyroscopes,
- des magnétomètres,
- des unités de mesure inertiels,
- un baromètre,
- une télémétrie,
- un sonar,
- des moyens de mesure de pression,
- un système d'éclairage stroboscopique (5) pour attirer, déranger, endommager et/ou attaquer une espèce considérant la sensibilité spectrale de chaque espèce à différentes longueurs d'onde, et
dans lequel le véhicule est capable de reproduire, par les moyens de haut-parleur, les sons stockés dans des paquets de représentation numérisés pour simuler les sons d'agonie, de secours, et/ou de peine d'une espèce.

2. Véhicule selon la revendication 1, dans lequel il mime les falconidés, les accipitriformes ou les strigiformes.

3. Véhicule selon l'une quelconque des revendications 1 ou 2, dans lequel les servomoteurs actionnent les mécanismes de l'aile et de la queue si le véhicule est à aile fixe.

4. Véhicule selon l'une quelconque des revendications 1 ou 2, dans lequel les servomoteurs actionnent le plateau oscillant et les ailerons pour la rotation cyclique si le véhicule est un hélicoptère à rotor unique, à double rotor, enchevêtré ou coaxial, en tandem, à rotors multiples, aérostat ou du type ornithoptère.

5. Véhicule selon l'une quelconque des revendications 1 à 5, dans lequel le pilote automatique configurable est basé sur un plateau, qui incorpore une microcommande de 32 bits et des cartes de communication.

6. Véhicule selon la revendication 5, dans lequel il comporte un modèle de satellite du système de navigation global par satellite qui permet de naviguer sur des points prédéfinis de passage.

7. Véhicule selon l'une quelconque des revendications 1 à 6, dans lequel les moyens de mesure de la pression sont choisis parmi des anémomètres de pression ou un tube de pilote.

8. Véhicule selon l'une quelconque des revendications 1 à 7, dans lequel il comporte en outre au moins l'un des dispositifs suivants :
- des panneaux solaires (11)
- une radiobalise (12)
- une caméra de contrôle stabilisée
- un système de communication radiofréquence
- une commande d'obturateur
- une commande par joystick
- un lien vidéo programmable en direct sur écran
- un cône moteur avec des miroirs lorsqu'il est utilisé pour chasser
- des dispositifs d'ondes ultrasoniques et/ou laser (7)
- des capteurs volumétriques et de chaleur (4)
